# EUROPÄISCHE PATENTSCHRIFT

(11) **EP 3 293 027 B1**
(45) Veröffentlichungstag und Bekanntmachung des Hinweises auf die Patenterteilung: **02.11.2022**
(21) Anmeldenummer: 16188597.5
(22) Anmeldetag: 13.09.2016
(51) Int. Cl.: B60J 5/06, B60J 7/06

(54) **DACH EINES PLANENAUFBAUS MIT EINER HOLMSTRUKTUR**
ROOF OF A PLANNING STRUCTURE WITH A RAIL STRUCTURE
TOIT D'UNE STRUCTURE BACHEE COMPRENANT UNE STRUCTURE DE LONGERON

(43) Veröffentlichungstag der Anmeldung: 14.03.2018
(73) Patentinhaber: Schmitz Cargobull AG, 48341 Altenberge (DE)
(72) Erfinder: Schouwink, Christian, 48161 Münster (DE); Hornig, Stefan, 48565 Steinfurt (DE)
(74) Vertreter: Cohausz & Florack

(56) Entgegenhaltungen:
- EP-A1- 1 008 476
- EP-A1- 2 902 228
- EP-A2- 1 867 509
- EP-A2- 1 918 145
- EP-A2- 2 759 428
- DE-A1-102014 013 725
- DE-U1- 29 700 177
- DE-U1-202014 000 805
- FR-A1- 2 595 304

## Beschreibung

Die Erfindung betrifft ein Dach eines Planenaufbaus für ein Nutzfahrzeug, insbesondere Lastkraftwagen, Anhänger oder Sattelauflieger, mit wenigstens einer Holmstruktur, wenigstens einem Rungenroller zum Verschieben einer mit dem Rungenroller verbundenen Runge in Richtung der Holmstruktur und mit wenigstens einem Planenroller zum Verschieben einer mit dem Planenroller verbundenen Plane in Richtung der Holmstruktur, wobei der Rungenroller wenigstens eine auf einer Rungenlauffläche der Holmstruktur in Längsrichtung der Holmstruktur abrollende und den Rungenroller im Wesentlichen in Schwerkraftrichtung stützende Rungenlaufrolle aufweist, wobei der Planenroller wenigstens eine auf einer Planenlauffläche der Holmstruktur in Längsrichtung der Holmstruktur abrollende und den Planenroller im Wesentlichen in Schwerkraftrichtung stützende Planenlaufrolle aufweist und wobei der Planenroller wenigstens eine den Planenroller im Wesentlichen quer zur Schwerkraftrichtung an wenigstens einer Planenstützfläche der Holmstruktur abstützende Planenabstützung aufweist. Zudem betrifft die Erfindung einen Planenaufbau für ein Nutzfahrzeug, insbesondere Lastkraftwagen, Anhänger oder Sattelauflieger, mit einem solchen Dach, mit wenigstens einer über einen Rungenroller am Dach geführten Runge und mit wenigstens einer über wenigstens einen Planenroller am Dach geführten Plane.

Nutzfahrzeuge der genannten Art, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Planenaufbauten für Nutzfahrzeuge mit einer Holmstruktur sind aus der DE 20 2014 000 805 U1, der DE 10 2014 013 725 A1 und der EP 2 759 428 A1 bekannt.

Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Plane. Dazu werden die Holmstrukturen im geschlossenen Zustand des Planenaufbaus von Rungen getragen, die am Rand des Laderaums angeordnet und dort lösbar mit dem Rand des Ladebodens verbunden sind. Die Rungen erstrecken sich dann in etwa senkrecht zum Ladeboden nach oben in Richtung des Dachs des Planenaufbaus. Je nachdem wo die Eckrungen vorgesehen sind, handelt es sich um sogenannte Mittelrungen oder Eckrungen. Eckrungen sind an den Ecken des Laderaums bzw. des Nutzfahrzeugs vorgesehen, während Mittelrungen seitlich am Nutzfahrzeug zwischen den Eckrungen vorgesehen sein können. Insbesondere bei Sattelaufliegern sind an jeder Seite regelmäßig 3 bis 4 Mittelrungen zwischen den Eckrungen vorgesehen.

Um das Be- und/oder Entladen von Planenaufbauten zu vereinfachen, können die Mittelrungen an ihrer Unterseite vom Boden des Planenaufbaus gelöst und in Längsrichtung der Holmstruktur nach vorne oder hinten verschoben werden. Zu diesem Zweck sind die Rungen über Rungenroller mit der Holmstruktur verbunden, die in der Holmstruktur gehalten und über Rungenlaufrollen auf Rungenlaufflächen entlang der Holmstruktur verschoben werden können. Das Verschieben der Rungen kann zusammen mit dem Aufschieben einer Seitenplane des Planenlaufs oder separat erfolgen. Die Seitenplane ist zum Zwecke des Aufschiebens mit Planenrollern verbunden, die über Planenroller mit der Holmstruktur verbunden sind. Die Planenroller sind in der Holmstruktur gehalten und können über Planenlaufrollen auf Planenlaufflächen entlang der Holmstruktur verschoben werden. Um den Planenroller im Wesentlichen quer zur Schwerkraftrichtung an der Holmstruktur abzustützen, weist die Holmstruktur wenigstens eine Planenstützfläche und der Planenroller wenigstens eine sich im Wesentlichen quer zur Schwerkraftrichtung an der Planenstützfläche abstützende Planenabstützung auf. Um die Planenroller beim Verschieben der Seitenplane entlang der Holmstruktur zu führen, kann sich die Planenstützfläche in Längsrichtung der Holmstruktur erstrecken und so beim Verschieben der Plane entlang der Längserstreckung der Holmstruktur dem Abstützen des Planenrollers, insbesondere der Planenabstützung, dienen. Alternativ kann die Holmstruktur aber auch eine Planenführungsfläche aufweisen, an der eine Planenführungsrolle abrollen kann. Wenn der Planenaufbau keine in Längsrichtung verschiebbaren Seitenplanen aufweist, können dennoch die Rungen zum Be- und Entladen längs der Holmstruktur verschoben werden. Darüber hinaus kann die Holmstruktur bedarfsweise zum Tragen und Verschieben eines sogenannten Schiebeverdecks genutzt werden, bei denen die Spriegel über Spriegelroller an der Holmstruktur verschiebbar festgelegt sind.

Für die unterschiedlichen Ausgestaltungen und Anforderungen an die beschriebenen Planenaufbauten stehen typischerweise viele unterschiedliche Holmstrukturen, Rungenroller und Planenroller zur Verfügung. Durch deren Kombination können stets geeignete Dächer für Planenaufbauten bereitgestellt werden. Die entsprechende Diversität der Dächer führt aber auch zu hohen Fertigungs- und Lagerhaltungskosten.

Daher liegt der vorliegenden Erfindung die Aufgabe zugrunde, das Dach und den Planenaufbau jeweils der eingangs genannten und zuvor näher beschriebenen Art derart auszugestalten und weiterzubilden, dass die Herstellung unterschiedlicher Dächer einfacher und kostengünstiger erfolgen kann.

Diese Aufgabe ist bei einem Dach nach dem Oberbegriff von Anspruch 1 dadurch gelöst, dass der obere Rand der wenigstens einen Rungenlaufrolle auf oder oberhalb einer durch die Planenabstützung und parallel zum Dach verlaufenden Ebene angeordnet ist, dass der wenigstens eine Rungenroller einen Rungenschlitten und wenigstens eine an dem Rungenschlitten festgelegte Rungenlaufrolle aufweist und dass jede Rungenlaufrolle in Längsrichtung der Holmstruktur gesehen an der der wenigstens einen Planenabstützung abgewandten Seite des an die wenigstens eine Rungenlaufrolle angrenzenden Rungenschlittenabschnitts festgelegt ist.

Die genannte Aufgabe ist zudem bei einem Planenaufbau nach dem Oberbegriff von Anspruch 14 dadurch gelöst, dass das Dach nach einem der Ansprüche 1 bis 13 ausgebildet ist.

Durch die Anordnung der wenigstens einen Planenabstützung relativ zur wenigstens einen Rungenlaufrolle in der Weise, dass der obere Rand der Rungenrolle wenigstens auf der Höhe der Planenabstützung angeordnet ist, wird eine kompakte und bevorzugte Geometrie der Holmstruktur möglich. Die wenigstens eine Planenabstützung und die wenigstens eine Rungenlaufrolle sind also vorzugsweise einander wenigstens teilweise überlappend vorgesehen. Dabei kommt es hinsichtlich der Planenabstützung insbesondere auf den sich an der Holmstruktur abstützenden Teil und weniger auf die Verbindung der Planenabstützung mit dem Rest des Planenrollers an. Bedarfsweise ist daher die Anlagefläche der Planenabstützung an der Holmstruktur nicht in Gänze höher angeordnet als der obere Rand der wenigstens einen Rungenlaufrolle. Mit anderen Worten kann die Planenabstützung bzw. dieAnlagefläche der Planenabstützung an der Holmstruktur neben oder auf Höhe der Rungenlaufrolle angeordnet werden. Als Planenabstützung kommt beispielsweise ein Vorsprung, eine Nase oder eine Rippe in Frage, die bedarfsweise aus einem Kunststoff gebildet sein kann und eine Anlagefläche zur Anlage an der Planenstützfläche aufweist.

Im Falle von mehreren Rungenlaufrollen des wenigstens einen Rungenrollers, deren obere Ränder auf unterschiedlichen Höhen bezogen auf das Dach in der Holmstruktur angeordnet sind, kann die wenigstens eine Rungenlaufrolle die Rungenlaufrolle mit dem am weitesten oben angeordneten Rand sein. Alternativ oder zusätzlich kann im Falle von mehreren Planenabstützungen des wenigstens einen Planenrollers, deren untere Ränder auf unterschiedlichen Höhen bezogen auf das Dach in der Holmstruktur angeordnet sind, unter der wenigstens einen Planenabstützung die Planenabstützung mit dem am niedrigsten angeordneten unteren Rand verstanden werden.

Die entsprechende Holmstruktur erlaubt es zudem, verschiedene Anforderungen an Planenaufbauten mit einer einzigen Holmstruktur zu erfüllen. Beispielsweise kann eine große Ladebreite im Laderaum zwischen den seitlichen Holmstrukturen und zugleich eine hohe Ladeöffnung zwischen dem Ladeboden und der Holmstruktur des Planenaufbaus bereitgestellt werden. Dies ist etwa dadurch möglich, dass die Holmstruktur infolge der Anordnung der wenigstens einen Planenabstützung und der wenigstens einen Rungenlaufrolle zueinander schmal und dennoch nicht sehr hoch baut. Trotzdem stellt die Holmstruktur eine große Funktionalität und Variabilität bereit, so dass die Holmstruktur für eine Vielzahl von Anwendungen geeignet ist.

Unter einer parallel zum Dach verlaufenden Ebene im Sinne der Erfindung kann eine solche Ebene verstanden werden, die parallel zu einer Hauptebene des Dachs ist. Das Dach muss also keine ebene Oberseite oder Unterseite aufweisen, damit eine Ebene als parallel zum Dach definiert werden kann. Es kommt in diesem Zusammenhang nämlich auch nicht auf eine exakte mathematische Definition bzw. Bestimmung der Ebene des Dachs an. Bevorzugt wird das Dach als parallel zu einem Ladeboden des Planenaufbaus angesehen, wobei der Ladeboden des Planenaufbaus regelmäßig eben ausgebildet ist aber auch davon abweichen kann, etwa wenn sogenannte Coilmulden oder dergleichen im Boden des Planenaufbaus vorgesehen sind. Alternativ oder zusätzlich dazu kann die Ebene des Dachs und damit eine dazu parallele Ebene quer zur Holmstruktur als horizontale Ebene verstanden werden, etwa wenn das Nutzfahrzeug in üblicher Weise auf einer horizontalen Ebene steht. Die vorstehenden Definitionen der Ebene des Dachs bzw. einer Ebene parallel zum Dach können bedarfsweise als synonym angesehen werden.

Bei einer ersten besonders bevorzugten Ausgestaltung des Dachs sind die wenigstens eine Planenabstützung des Planenrollers als Planenführungsrolle und die Planenstützfläche der Holmstruktur als Planenführungsfläche ausgebildet. Dann kann die Plane bzw. können die Planenroller beim Öffnen der Plane leicht und präzise an der Holmstruktur geführt sein. Die wenigstens eine Planenführungsrolle kann dabei an der wenigstens einen Planenführungsfläche abrollen und dabei im Wesentlichen quer zur Schwerkraftrichtung an der Planenführungsfläche geführt werden. Dann ist die wenigstens eine Planenführungsrolle so angeordnet, dass der obere Rand der wenigstens einen Rungenlaufrolle auf oder oberhalb einer durch die wenigstens eine Planenführungsrolle und parallel zum Dach verlaufenden Ebene angeordnet ist, um weiter von den zuvor beschriebenen Vorteilen Gebrauch machen zu können.

Alternativ oder zusätzlich schneidet eine durch die Planenabstützung und/oder Planenführungsrolle des wenigstens einen Planenrollers und parallel zum Dach verlaufenden Ebene die wenigstens eine Rungenlaufrolle des wenigstens einen Rungenrollers zwischen dem oberen Rand und dem unteren Rand der Rungenlaufrolle. Die wenigstens eine Rungenlaufrolle ist also auf der Höhe, insbesondere neben der Planenabstützung und/oder Planenführungsrolle angeordnet und umgekehrt. Diese Ausgestaltung der Holmstruktur hat sich als besonders platzsparend und vorteilhaft hinsichtlich der Geometrie der Holmstruktur erwiesen. Die Anordnung der wenigstens einen Rungenlaufrolle weiter oben bezogen auf die wenigstens eine Planenabstützung und/oder Planenführungsrolle oder die Anordnung der wenigstens einen Planenabstützung und/oder Planenführungsrolle unterhalb der wenigstens einen Rungenlaufrolle kann geometrische und strukturelle Kompromisse nach sich ziehen, welche die Geometrie und die Abmessungen der Holmstruktur nachteilig beeinflussen können. Auch in diesem Falle gilt, dass bei mehreren Rungenlaufrollen des wenigstens einen Rungenrollers, deren obere Ränder auf unterschiedlichen Höhen bezogen auf das Dach in der Holmstruktur vorgesehen sind, die wenigstens eine Rungenlaufrolle die Rungenlaufrolle mit dem am weitesten oben angeordneten Rand sein kann. Alternativ oder zusätzlich kann im Falle von mehreren Planenabstützungen und/oder Planenführungsrollen des wenigstens einen Planenrollers, deren untere Ränder auf unterschiedlichen Höhen bezogen auf das Dach in der Holmstruktur angeordnet sind, unter der wenigstens einen Planenabstützung und/oder Planenführungsrolle die Planenabstützung und/oder Planenführungsrolle mit dem am niedrigsten angeordneten unteren Rand verstanden werden.

Aus konstruktiven und geometrischen Gründen ist es zudem bevorzugt, wenn die wenigstens eine Planenabstützung und/oder Planenführungsrolle des wenigstens einen Planenrollers unterhalb der wenigstens einen Planenlaufrolle des Planenrollers angeordent ist. Entsprechende Planenroller lassen sich zudem einfach und zuverlässig bedienen.

Alternativ oder zusätzlich kann der wenigstens eine Planenroller derart gegenüber der Holmstruktur schwenkbar vorgesehen sein, dass die wenigstens eine Planenabstützung und/oder Planenführungsrolle von der zugeordneten Planenstützfläche und/oder Planenführungsfläche abhebt und sich ein Abstand zwischen der wenigstens einen Planenabstützung und/oder Planenführungsrolle einerseits und der zugeordneten Planenstützfläche und/oder Planenführungsfläche andererseits ausbildet. Auf diese Weise wird eine einfache und zuverlässige Bedienung der Schiebeplane des Planenaufbaus erreicht, ohne dass dadurch unverhältnismäßige Nachteile hinsichtlich der Struktur und der Geometrie der Holmstruktur in Kauf genommen werden müssen. Dies gilt umso mehr, wenn der Planenroller, insbesondere die Planenstützfläche und/oder Planenführungsrolle seitlich nach außen bezogen auf die Holmstruktur bzw. auf den Planenaufbau schwenkbar ausgebildet ist.

Damit der wenigstens eine Planenroller stabil an der Holmstruktur gehalten ist, auch wenn die Seitenplane des Planenaufbaus verschoben wird, bietet es sich an, wenn wenigstens zwei Planenlaufrollen an wenigstens einem Planenroller vorgesehen sind. Damit dies platzsparend realisiert werden kann, ist es weiter bevorzugt, wenn die wenigstens zwei Planenlaufrollen des wenigstens einen Planenrollers auf einer gemeinsamen Planenlauffläche der Holmstruktur ablaufend vorgesehen sind.

Zur sicheren und zuverlässigen Handhabe der wenigstens einen Runge des Planenaufbaus weist der wenigstens eine Rungenroller einen Rungenschlitten und wenigstens eine an dem Rungenschlitten festgelegte Rungenlaufrolle auf. Der Rungenschlitten kann dann bedarfsweise die notwendige Festigkeit und Steifigkeit bereitstellen und jeweils mit der eigentlichen Runge verbunden sein. Dabei wird eine platzsparende und geometrisch vorteilhafte Ausgestaltung der Holmstruktur dadurch erreicht, dass die wenigstens eine Rungenlaufrolle auf einer Seite des an die Rungenlaufrolle angrenzenden Abschnitts des Rungenschlittens vorgesehen ist, die weg weist von der wenigstens einen Planenabstützung. Mit anderen Worten ist die wenigstens eine Rungenlaufrolle an der der wenigstens einen Planenabstützung und/oder Planenführungsrolle abgewandten Seite des Rungenschlittens oder des Rungenschlittenabschnitts vorgesehen, der an die wenigstens eine Rungenlaufrolle angrenzt. Vorzugsweise ist dies dergestalt verwirklicht, dass der Rungenschlitten quer zur Holmstruktur gesehen und bedarfsweise in einer Ebene zwischen der wenigstens einen Rungenlaufrolle und der wenigstens einen Planenabstützung und/oder Planenführungsrolle angeordnet ist.

Alternativ oder zusätzlich kann der wenigstens eine Rungenroller wenigstens zwei an dem Rungenschlitten festgelegte Rungenlaufrollen aufweisen. Dadurch kann der Rungenschlitten und damit der Rungenroller gegenüber einem Kippen gesichert oder wenigstens stabiler an der Holmstruktur gehalten werden. Eine besonders platzsparende und in geometrischer Hinsicht vorteilhafte Ausgestaltung der Holmstruktur sieht dabei vor, dass die wenigstens zwei Rungenlaufrollen in Längsrichtung der Holmstruktur gesehen auf derselben Seite des an die wenigstens eine Rungenlaufrolle angrenzenden Rungenschlittenabschnitts festgelegt sind. Der Rungeroller inklusive der Rungenlaufrollen kann so recht schmal ausgebildet werden, was der benötigten Breite der Holmstruktur zur Aufnahme des Rungenrollers zugutekommen kann. Mit anderen Worten wird vorzugsweise auf Rungenlaufrollen an beiden bzw. gegenüberliegenden Seiten des Rungenschlittens oder des den Rungenlaufrollen zugeordneten Rungenschlittenabschnitts verzichtet, um so geometrische und strukturelle Vorteile zu erzielen.

Alternativ oder zusätzlich bietet es sich aus struktureller und geometrischer Sicht an, wenn wenigstens zwei Rungenlaufrollen des wenigstens einen Rungenrollers auf einer gemeinsamen Rungenlauffläche der Holmstruktur ablaufend vorgesehen sind. Besonders zweckmäßig ist es dabei, wenn alle Rungenlaufrollen des wenigstens einen Rungenrollers auf einer gemeinsamen Rungenlauffläche abrollend vorgehen sind. Auf diese Weise reicht es aus, eine einzige Rungenlauffläche in der Holmstruktur bereitzustellen, was ein Platzersparnis nach sich ziehen kann.

Die Holmstruktur kann besonders schmal ausgebildet werden, ohne dass dies zu einer unerwünschten Beeinträchtigung der Länge der Holmstruktur führen muss, wenn die wenigstens eine Planenstützfläche und/oder Planenführungsfläche gegenüber einer an der Außenseite der Holmstruktur vorgesehenen Ebene wenigstens abschnittsweise nach innen versetzt angeordnet ist. Unter einem solchen Versatz wird insbesondere ein solcher verstanden, der in Richtung der wenigstens einen Rungenlaufrolle gerichtet ist. Alternativ oder zusätzlich kann der Versatz aber auch in Richtung der dem Laderaum des Planenaufbaus zugewandten Innenseite der Holmstruktur vorgesehen sein.

Zur geeigneten Führung des Rungenrollers auf platzsparende Weise kann die wenigstens eine Rungenlauffläche der Holmstruktur und/oder die wenigstens eine Planenlauffläche der Holmstruktur eine im Querschnitt der Holmstruktur gekrümmte Form aufweisen. Wenn die Krümmung etwa in Form eines nach oben offenen U ausgebildet ist, kann zudem ein seitliches Verrutschen der wenigstens einen Rungenlaufrolle und/ oder der wenigstens einen Planenlaufrolle vermieden werden. Alternativ oder zusätzlich kann für ein leichtes und exaktes Verschieben der Seitenplane und/oder der wenigstens einen Runge die wenigstens eine Rungenlaufrolle und/oder die wenigstens eine Planenlaufrolle eine gekrümmte Lauffläche aufweisen. Dabei ist eine Krümmung besonders zweckmäßig, bei der die entsprechende Lauffläche mittig nach außen gewölbt und/oder im Querschnitt etwa U-förmig ausgebildet ist.

Hinsichtlich der Führung des Planenrollers und der zuverlässigen Ableitung der auftretenden Kräfte kann die wenigstens eine Planenstützfläche und/oder Planenführungsfläche der Holmstruktur eine ebene Form und/oder die Planenabstützung und/oder Planenführungsrolle eine ebene Anlagefläche und/oder Lauffläche aufweisen.

Eine zuverlässige und platzsparende Anbindung der Rungen kann erreicht werden, wenn sich der Rungenschlitten des wenigstens einen Rungenrollers durch einen nach unten offenen und sich in Längsrichtung der Holmstruktur erstreckenden Schlitz in die Holmstruktur hinein erstreckt. Im entsprechenden Bereich ist der Rungenschlitten daher vorzugsweise plattenförmig ausgebildet. Zudem können strukturelle und geometrische Vorteile erzielt werden, wenn der an die wenigstens eine Rungenlaufrolle angrenzende Rungenschlittenabschnitt in Längsrichtung der Holmstruktur gesehen seitlich neben der wenigstens einen Rungenlauffläche angeordnet ist. Alternativ oder zusätzlich kann an der dem Planenroller zugewandten Seite des Schlitzes auch eine Anlagefläche für wenigstens ein an wenigstens einem Ende der Holmstruktur eingeschobenes Montageprofil vorgesehen sein. Über das wenigstens eine Montageprofil kann die Holmstruktur dann einfach und sicher mit der Stirnwand und/oder der Rückwand des Planenaufbaus verbunden werden. Zu diesem Zweck ist die wenigstens eine Anlagefläche wenigstens überwiegend quer zur Schwerkraftrichtung ausgerichtet. So kann die Holmstruktur beispielsweise von der Unterseite der Holmstruktur mit dem wenigstens einen Montageprofil verschraubt werden.

Zum Verbinden der Holmstruktur mit einer Stirnwand und/oder einer Rückwand über ein entsprechendes Montageprofil kann alternativ oder zusätzlich in bevorzugter Weise unterhalb der Planenstützfläche und/oder der Planenführungsfläche eine Aufnahme zur Aufnahme des wenigstens einen Montageprofils vorgesehen sein, das von einem Ende der Holmstruktur in die Holmstruktur eingeschoben werden kann. Dabei ist die Aufnahme vorzugsweise zu der vom Planenroller abgewandten Seite der Holmstruktur offen ausgebildet. So kann ein breiteres Montageprofil vorgesehen werden, das größere Montagekräfte aufnehmen kann. Damit das in die Holmstruktur eingeschobene Montageprofil einfach, etwa quaderförmig, ausgebildet werden kann, ist die Aufnahme im Querschnitt bedarfsweise etwa U-förmig ausgebildet. Um ein breites Montageprofil vorsehen und so hohe Montagekräfte übertragen zu können, erstreckt sich die Aufnahme für das Montageprofil bevorzugt wenigstens bis zu einer durch die Planenstützfläche und/oder Planenführungsfläche definierten und senkrecht zum Dach verlaufenden Ebene in Richtung der dem Planenroller zugewandten Seite der Holmstruktur. Das Montageprofil kann sich dabei bedarfsweise sowohl in der Aufnahme als auch an oder angrenzend zu der Rungenlauffläche abstützen. Die wenigstens zwei Anlageflächen zwischen dem Montageprofil und der Holmstruktur können dabei durch den an der Unterseite der Holmstruktur vorgesehenen Schlitz voneinander getrennt sein. Grundsätzlich kann der Aufnahmeraum für die wenigsten eine Rungenlaufrolle im der Holmstruktur unterhalb der Planenstützfläche und/oder der Planenführungsfläche breiter sein als im Bereich der Planenstützfläche und/oder der Planenführungsfläche.

Um ein Verkeilen des Rungenrollers und/oder eine Beschädigung der wenigstens einen Rungenlaufrolle zu vermeiden, kann der Rungenschlitten schwenkbar mit der Runge verbunden sein. So ist es bedarfsweise möglich, dass die Runge gegenüber dem Rungenschlitten um eine Achse parallel zur Längserstreckung der Holmstruktur geschwenkt werden kann. Die Runge kann in diese Richtung insbesondere beim Festlegen und Lösen der Runge am Ladeboden des Planenaufbaus und/oder beim Verschieben der Rungen entlang der Holmstruktur geschwenkt werden. Die entsprechende Handhabung der Runge wird durch die schwenkbare Anbindung an den Rungenschlitten nicht behindert. Gleichzeitig kann der Rungenroller beim Verschwenken der Runge in wenigstens im Wesentlichen unveränderter Ausrichtung in der Holstruktur gehalten sein. Die entsprechende Schwenkbarkeit, kann durch ein Schwenkgelenk zwischen dem Rungenroller und der Runge bereitgestellt werden. Der Einfachheit und Langlebigkeit halber wird jedoch bevorzugt, wenn der Rungenroller mit so viel Spiel mit der eigentlichen Runge verbunden ist, dass das Spiel das Schwenken der Runge ermöglicht.

Damit die wenigstens eine Rungenlaufrolle sicher geführt und gegenüber einem übermäßigen Abheben von der Rungenlauffläche gesichert werden kann, weist die Holmstruktur vorzugsweise wenigstens eine sich in Längsrichtung der Holmstruktur erstreckende Stützfläche zum Abrollen der wenigstens einen Rungenlaufrolle auf, wenn sich die wenigstens eine Rungenlaufrolle in einer von der Rungenlauffläche abgehobenen Stellung befindet und die zugehörige Runge längs der Holmstruktur verschoben wird.

Die Flexibilität für den Einsatz der Holmstruktur kann erhöht werden, wenn wenigstens ein Spriegelroller zum Verschieben eines Spriegels längs der Holmstruktur vorgesehen ist. Dabei bietet es sich funktional an, wenn der Spriegelroller wenigstens eine auf einer Spriegellauffläche der Holmstruktur in Längsrichtung der Holmstruktur abrollende und den Rungenroller im Wesentlichen in Schwerkraftrichtung tragende Spriegellaufrolle aufweist. So können letztlich die Spriegel und die von den Spriegeln getragene Plane sicher gegenüber der Holmstruktur abgestützt bzw. von der Holmstruktur getragen werden. Wenn alternativ oder zusätzlich wenigstens eine auf einer Stützfläche der Holmstruktur in Längsrichtung der Holmstruktur abrollende und den Rungenroller im Wesentlichen entgegen der Schwerkraftrichtung gegenüber einem Abheben des Spriegelrollers sichernde Spriegelstützrolle vorgesehen ist, können die Spriegel und die von den Spriegeln gehaltene Plane sicher an der Holmstruktur gehalten werden. Unabhängig davon kann zum zuverlässigen und einfachen Führen der Spriegel beim Aufschieben und/oder Schließen des Schiebeverdecks wenigstens eine den Spriegelroller im Wesentlichen quer zur Schwerkraftrichtung führende, auf einer Planenführungsfläche der Holmstruktur abrollende Spriegelführungsrolle aufweisen.

Um die Funktionalität eines Schiebeverdecks und zudem eine vielseitig einsetzbare Holmstruktur bereitstellen zu können, bietet es sich an, die wenigstens eine Spriegellaufrolle des wenigstens einen Spriegelrollers weiter innen in Bezug auf die wenigstens eine Spriegelstützrolle des wenigstens einen Spriegelrollers und bedarfsweise ergänzend die Spriegelführungsrolle des wenigstens einen Spriegelrollers in Querrichtung zur Holmstruktur zwischen der Spriegellaufrolle und der Spriegelstützrolle vorzusehen.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Planenaufbau und einem erfindungsgemäßen Dach in einer perspektivischen Ansicht,
- Fig. 2A-B: Details des Dachs aus Fig. 1 in einer Querschnittsansicht entlang der Schnittebene II-II aus Fig. 1,
- Fig. 3: das Detail aus Fig. 2A in einer Seitenansicht von der Außenseite des Planenaufbaus gesehen und
- Fig. 4: das Detail des Dachs gemäß Fig. 2B an einem mit der Rückwand verbunden Ende der Holmstruktur.

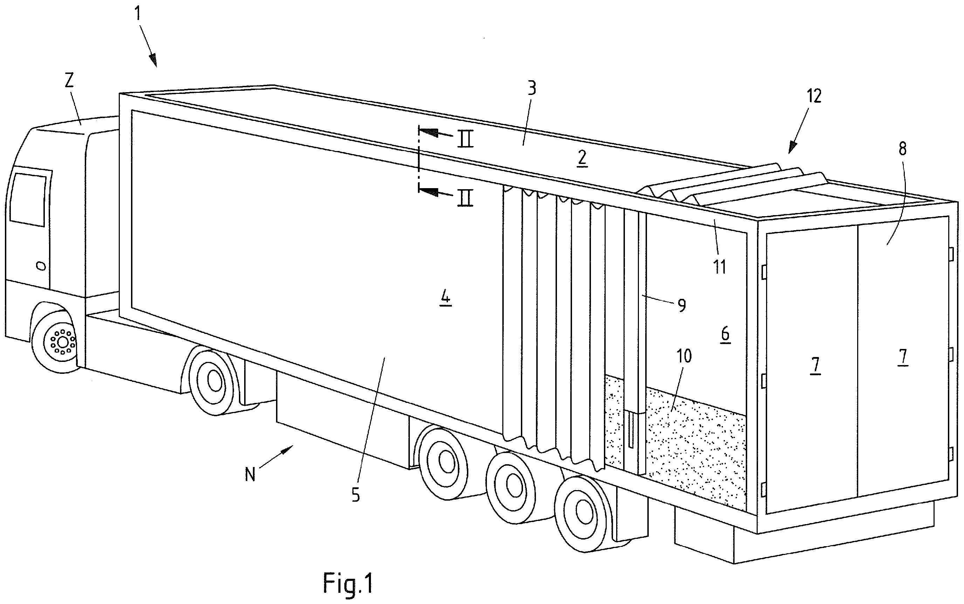

In der Fig. 1 ist ein von einer Zugmaschine Z gezogenes Nutzfahrzeug N in Form eines Sattelaufliegers dargestellt. Das Nutzfahrzeug N weist einen Planenaufbau 1 in Form eines Curtainsiders auf. Der Planenaufbau 1 weist eine Plane 2 am Dach 3 und jeweils eine Seitenplane 4 an den beiden Seitenwänden 5 des Planenaufbaus 1 auf. Die beiden Seitenplanen 4 an den Seitenwänden 5 können nach vorne oder nach hinten verschoben werden, um den Zugang zu dem vom Planenaufbau 1 umschlossenen Laderaum 6 freizugeben. Ein weiterer Zugang zum Laderaum 6 kann durch die Flügeltüren 7 der Rückwand 8 erfolgen. Die Seitenplane 4 an der vorderen Seitenwand 5 des Planenaufbaus 1 ist teilweise aufgeschoben, so dass eine Runge 9 erkennbar ist, die einerseits mit dem Ladeboden 10 des Planenaufbaus 1 und andererseits mit einer sich in Längsrichtung erstreckenden Holmstruktur 11 in Form eines Längsholms verbunden ist. Die Runge 9 kann zum Be- und Entladen vom Ladeboden 10 des Planenaufbaus 1 getrennt und entlang der Holmstruktur 11 nach vorne oder nach hinten verschoben werden. Neben der in der Fig. 1 dargestellten Runge sind noch weitere gleichartige, durch die vordere Seitenplane 4 verdeckte Rungen 9 vorgesehen. Die Plane 2 am Dach 3 des Planenaufbaus 1 kann ebenfalls zum Be- und Entladen nach vorne geschoben werden. Die Plane 2 am Dach 3 ist daher Teil eines Schiebeverdecks 12, das seitlich ebenfalls an der Holmstruktur 11 gehalten ist.

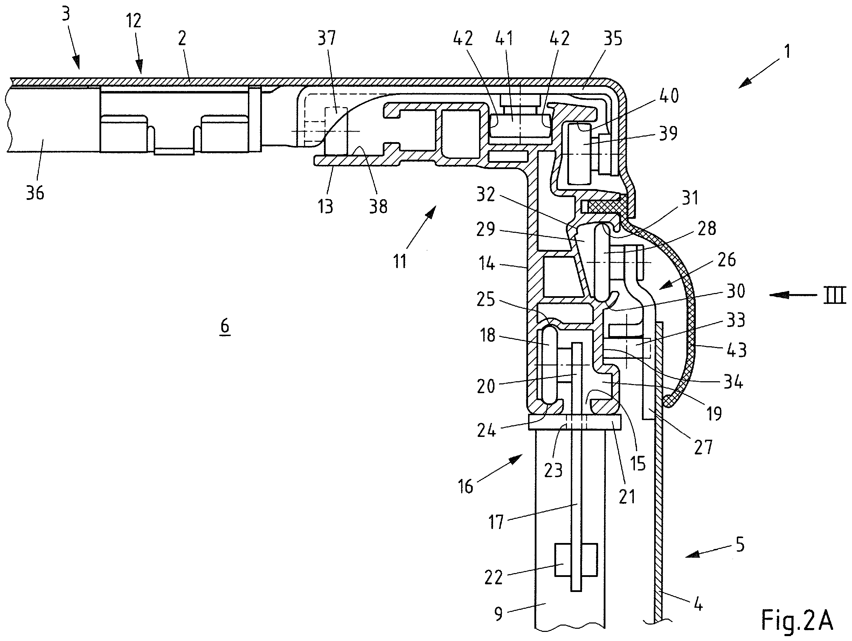

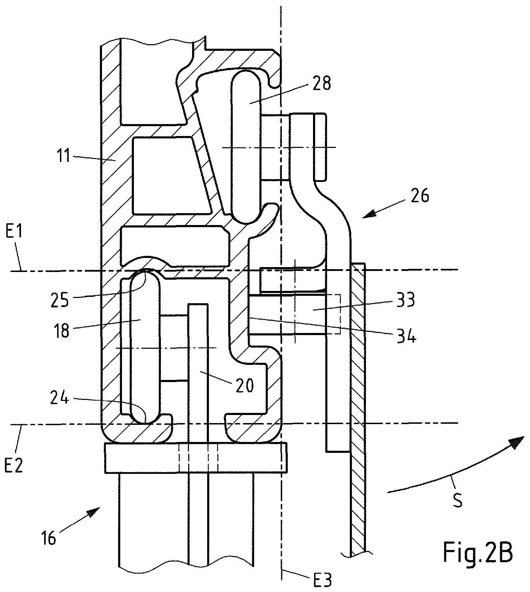

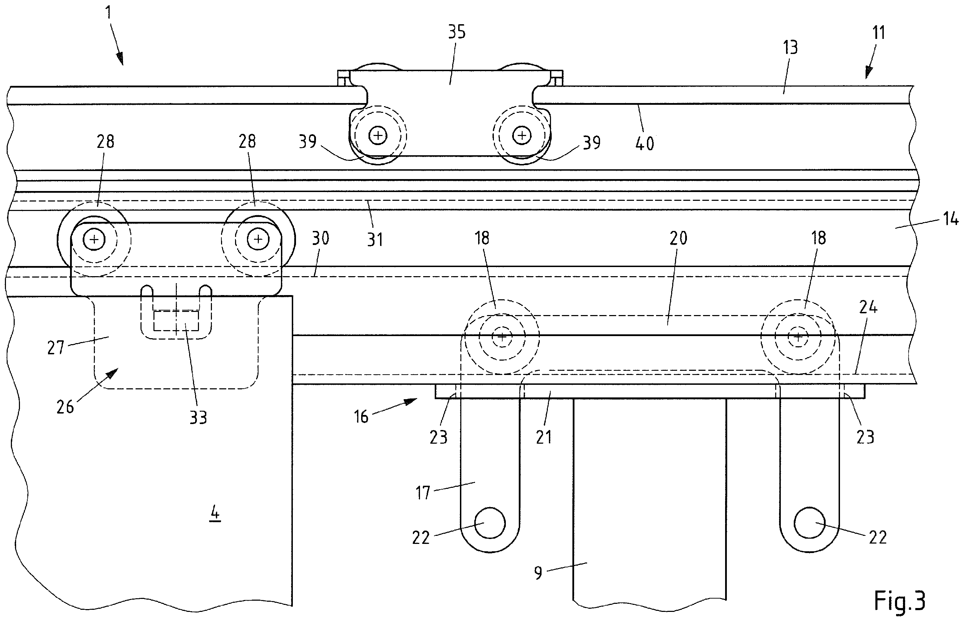

In den Fig. 2A-B ist ein Detail des Dachs 3 in einer Schnittansicht durch die Holmstruktur 11 dargestellt. Dasselbe Detail ist zudem in der Fig. 3 in einer Seitenansicht von der Außenseite des Planenaufbaus 1 dargestellt, wobei jedoch die Plane 2 des Dachs 3 der besseren Anschaulichkeit halber weggelassen worden ist. Die Fig. 2A-B und die Fig. 3 werden anschließend zusammen beschrieben.

Die Holmstruktur 11 ist L-förmig ausgebildet mit einem oberen Schenkel 13 wenigstens im Wesentlichen parallel zum Dach 3 und einem seitlichen Schenkel 14 wenigstens im Wesentlichen senkrecht zum Dach 3. An der Unterseite der Holmstruktur 11 ist ein Schlitz 15 vorgesehen, der sich in Längsrichtung der Holmstruktur 11 erstreckt und der Anbindung der der Holmstruktur 11 zugeordneten Rungen 9 dient. Die Rungen 9 sind dabei mit Rungenrollern 16 verbunden, die jeweils einen Rungenschlitten 17 und Rungenlaufrollen 18 umfassen. Der Rungenschlitten 17 erstreckt sich durch den Schlitz 15 in die Holmstruktur 11 hinein, und zwar in einen Aufnahmeraum 19 für die Rungenlaufrollen 18.

Die Rungenlaufrollen 18 sind an dem Rungenschlitten 17 festgelegt und in Längsrichtung der Holmstruktur 11 gesehen auf einer gemeinsamen Seite des Rungenschlittens 17 bzw. des an die Rungenlaufrollen 18 angrenzenden, in der Holmstruktur 11 aufgenommenen Rungenschlittenabschnitts 20 angeordnet. Die eigentliche Runge 9 liegt im mit dem Ladeboden 10 verbundenen Zustand mit einem Kragen 21, vorzugsweise reibschlüssig, an der Unterseite der Holmstruktur 11 an. Zudem kann die eigentliche Runge 9 im vom Ladeboden 10 gelösten Zustand mit dem am Rungenschlitten 17 festgelegten Kragen 21 bis zu Anschlägen 22 herunterrutschen, die den Kragen 21 sodann stützen. Zwischen dem Rungenschlitten 17 und den Öffnungen 23 zum Durchführen des Rungenschlittens 17 im Kragen 21 ist viel Spiel vorgesehen, so dass die Runge 9 nach außen geschwenkt werden kann, ohne dass dabei der Rungenschlitten 17 in dieselbe Richtung ausgelenkt wird bzw. die Rungenlaufrollen 18 in der Aufnahme 19 für die Rungenlaufrollen 18 nicht blockieren oder gequetscht werden. Die Rungenlaufrollen 18 sind zum Halten des Rungenrollers 16 insbesondere im vom Ladeboden 10 gelösten Zustand auf einer Rungenlauffläche 24 abgestützt, auf der die Rungenlaufrollen 18 zum Verschieben des Rungenrollers 16 zusammen mit der Runge 9 in Richtung der Holmstruktur 11 abrollen. Oberhalb der Rungenlaufrollen 18 ist eine Stützfläche 25 zum Abrollen der wenigstens einen Rungenlaufrollen 18 in einer von der Rungenlauffläche 24 abgehobenen Stellung. Die Stützfläche 25 erstreckt sich in Längsrichtung der Holmstruktur 11 und stellt bei der dargestellten und insoweit bevorzugten Holmstruktur 11 einen Teil des Aufnahmeraums 19 für die Rungenlaufrollen 18 dar.

Neben der Runge 9 ist die Seitenplane 4 in einer teilweise geöffneten Stellung dargestellt. Die Seitenplane 4 ist an einer Reihe von Planenrollern 26 festgelegt, die einen Planenschlitten 27 und Planenlaufrollen 28 aufweisen, die in einem Aufnahmeraum 29 für die Planenlaufrollen 28 aufgenommen sind. Die Planenlaufrollen 28 werden von einer Planenlauffläche 30 gestützt, entlang der die Planenroller 28 beim Verschieben der Seitenplane 4 verschoben werden und abrollen. Wie die Rungenlaufrollen 18 sind die Planenlaufrollen 28 in Längsrichtung der Holmstruktur 11 hintereinander angeordnet und gleichartig ausgebildet. Zudem weisen die Planenlaufrollen 28 ebenso wie die Rungenlaufrollen 18 gekrümmte und in der Mitte nach außen gewölbte Laufflächen auf. Die Rungenlauffläche 24 und die Planenlauffläche 30 weisen dazu korrespondierend eine etwa U-förmig gekrümmte, nach oben offene Form auf. Oberhalb von und angrenzend zu den Planenlaufrollen 28 ist eine Stützfläche 31 vorgesehen, die das Abheben der Planenlaufrollen 28 nach oben begrenzt. Beim Verschieben der Seitenplane 4 kann der Planenroller 26 um eine Achse in der durch den Pfeil S gekennzeichneten Richtung nach außen geschwenkt werden, die durch die Verbindungsbereiche zwischen den Planenlaufrollen 28 und die Planenlauffläche 30 verläuft. Bei einem maximalen Schwenkwinkel gelangen die Planenlaufrollen 28 in Anlage an einen inneren Anschlag 32, der ein weiteres Schwenken des Planenrollers 26 nach außen verhindert. Das Zurückschwenken des Planenrollers 26 in Richtung der Ausgangsstellung wird beim Erreichen der Ausgangsstellung durch die Anlage einer Planenführungsrolle 33 an einer Planenführungsfläche 34 begrenzt. Der Planenroller 26 kann beim Verschieben der Seitenplane 4 entlang der Holmstruktur 11 durch das Abrollen der Planenführungsrolle 33 an der Planenführungsfläche 34 der Holmstruktur 11 geführt werden.

Bei dem dargestellten und insoweit bevorzugten Dach 3 ist die Planenführungsrolle 33 in der Ausgangsstellung auf Höhe der Rungenlaufrollen 28 angeordnet. Eine Ebene E1 parallel zum Dach 3 auf Höhe der oberen Ränder der Rungenlaufrollen 28 ist oberhalb der Planenführungsrolle 33 angeordnet, während eine Ebene E2 parallel zum Dach 3 auf der Höhe der unteren Ränder der Rungenlaufrollen 28 unterhalb der Planenführungsrolle 33 angeordnet ist. Mithin sind die Rungenlaufrollen 28 und die Planenführungsrolle 33 wenigstens abschnittsweise nebeneinander angeordnet. Dasselbe gilt für die Planenführungsfläche 34, die gegenüber einer Ebene E3 an der Außenseite der Holmstruktur 11 nach innen versetzt ist, und zwar in Richtung des Rungenschlittens 17 bzw. in Richtung der Rungenlaufrollen 18. Die Planenführungsrolle 33 und die Planenführungsfläche 34 sind bei dem dargestellten und insoweit bevorzugten Dach 3 eben, also nicht mit einem gekrümmten Querschnitt ausgebildet. Zudem sind die Rungenlaufrollen 18 gemeinsam auf der der Planenführungsrolle 33 abgewandten Seite des Rungenschlittens 17 bzw. des an die Rungenlaufrollen 18 angrenzenden Rungenschlittenabschnitts 20 vorgesehen.

Bei einem nicht dargestellten Ausführungsbeispiel kann anstelle der Planenlaufrolle 33 eine Planenabstützung vorgesehen sein, die sich an der Planenlauffläche 4 dann in Form einer Planenstützfläche abstützen kann. Die Planenbstützung rollt in Ermangelung einer entsprechenden Rolle nicht an der Holmstruktur ab. Vielmehr stützt sich die Planenabstützung an der Planenstützfläche ab, oder die Planenabstützung gleitet beim Verschieben der Plane an der Planenstützfläche ab. Bedarfsweise ist die Planenabstützung aus einem Kunststoff und falls gewünscht elastisch ausgebildet.

Dem oberen Schenkel 13 der Holmstruktur 11 zugeordnet sind Spriegelroller 35 vorgesehen, die mit sich quer zum Dach 3 erstreckenden Spriegeln 36 verbunden sind. Die Spiegel 36 tragen die Plane des Dachs 3 und können über die Spriegelroller 35 entlang der Holmstruktur 11 verschoben werden. Auf diese Weise wird ein sogenanntes Schiebeverdeck erhalten. Die Spriegelroller 35 sind über jeweils zwei Spriegellaufrollen 37 an einer Spriegellauffläche 38 der Holmstruktur abgestützt. Beim Verschieben der Spriegel 36 und der Plane 2 des Dachs 3 entlang der Holmstruktur rollen die Spriegellaufrollen 37 an der Spriegellauffläche 38 ab. Damit die Spriegel 36 und die Spriegelroller 35 nicht versehentlich von der Holmstruktur 11 abgehoben werden, stützen sich der Außenseite der Spriegelroller 35 zugeordnete Spriegelstützrollen 39 gegen über einer Stützfläche 40 ab. Zwischen den jeweils zwei Spriegellaufrollen 37 und der Spriegelstützrollen 39 ist noch eine Spriegelführungsrolle 41 vorgesehen, die an einander gegenüberliegenden Spriegelführungsflächen 42 abrollen kann, um das Verschieben des Spriegelrollers 35 entlang der Holmstruktur 11 zu führen.

Beim dargestellten und insoweit bevorzugten Dach 3 sind die Spriegelführungsflächen 42 und die Planenführungsfläche 34 und die parallel zum seitlichen Schenkel 14 der Holmstruktur 11, senkrecht zum Dach 3 und/oder vertikal ausgerichtet, während die Spriegellauffläche 38 und die Stützfläche 37 parallel zum Dach 3, parallel zum oberen Schenkel 13 der Holmstruktur 11 und/oder horizontal ausgerichtet sind. Zudem weisen die Spriegellaufrollen 37, die Spriegelstützrollen 39 und die Spriegelführungsrolle 41 ebene Laufflächen auf. Dementsprechend korrespondierend sind die Spriegellauffläche 38, die Stützfläche 40 und die Spriegelführungsflächen 42 ebenfalls eben ausgebildet. Im Übrigen ist zur Abdichtung des Dachs 3 eine Kunststoffdichtung 43 seitlich an der Holmstruktur 11 festgelegt, die sich seitlich teilweise über den Planenroller 26 und die Plane 4 nach unten erstreckt.

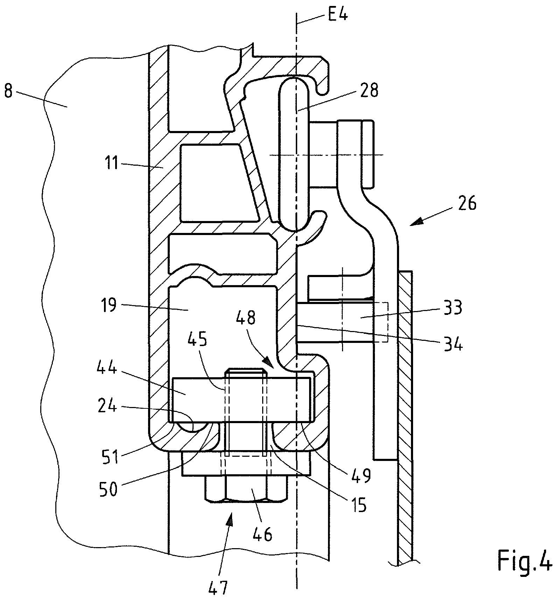

In der Fig. 4 ist ein Querschnitt durch die Holmstruktur 11 angrenzend zur Rückwand 8 vorgesehen, die ein Montageprofil 44 umfasst, welches in das zugehörige Ende der Holmstruktur 11 in Längsrichtung der Holmstruktur 11 eingeschoben und zur Verbindung der Holmstruktur 11 mit der Rückwand 8 vorgesehen ist. Das dargestellte und insoweit bevorzugte Montageprofil 44 ist als einerseits flaches und andererseits längliches Blechbauteil ausgebildet und ist in den Aufnahmeraum 19 für die Rungenlaufrollen 18 eingeführt. Das Montageprofil 44 weist über seine Längserstreckung verteilt mehrere Gewindebohrungen 45 auf, in die von untern Schrauben 46 zur Bildung einer Schraubverbindung 47 zwischen Holmstruktur 11 und Rückwand 8 eingedreht sind. Das Montageprofil 44 ist mit seinem rechten Rand in einer U-förmigen Aufnahme 48 der Holmstruktur 11 eingeführt und erstreckt sich wie die Aufnahme 48 weiter nach außen als die durch die Planenführungsfläche 34 definierte und senkrecht zum Dach 3 verlaufende Ebene E4. Auf diese Weise wird eine große Kontaktfläche zwischen dem Montageprofil 44 und der Holmstruktur 11 erreicht, die sich durch die Anlagefläche 49 in der U-förmigen Aufnahme 48 auf der einen Seite des Schlitzes 15 in der Unterseite der Holmstruktur 11 und die beiden Anlageflächen 50,51 angrenzend zu der Rungenlauffläche 24 und auf der anderen Seite des Schlitzes 15 zusammensetzt. Die Holmstruktur 11 wird unterhalb der Planenführungsfläche 34 gegenüber der Planenführungsfläche 34 weiter nach außen geführt, um im Inneren der Holmstruktur 11, insbesondere im Aufnahmeraum 19 für die Rungenlaufrollen 18, quer zur Holmstruktur 11 mehr Platz für die Aufnahme eines breiteren Montageprofils 44 zu schaffen, das eine größere Kontaktfläche mit der Holmstruktur 11 bereitstellen kann. Grundsätzlich kann der Aufnahmeraum 19 für die Rungenlaufrollen 18 unterhalb der Planenführungsfläche 34 quer zur Holmstruktur 11 und parallel zum Dach 3 breiter sein als auf der Höhe der Planenführungsfläche 34, um das Montageprofil 44 in geeigneter Weise aufnehmen zu können.

Die Stirnwand des dargestellten und insoweit bevorzugten Planenaufbaus 1 ist analog zur Rückwand 8 über ein Montageprofil 44 mit der Holmstruktur 11 verbunden. Da die Planenroller 26 nicht bis in die entsprechenden Endbereiche der Holmstruktur 11 verschoben werden müssen, stören die dort vorgesehenen Montageprofile 44 das Öffnen und Schließen der Plane 2 nicht weiter.

### Bezugszeichenliste

- Z: Zugmaschine
- N: Nutzfahrzeug
- 1: Planenaufbau
- 2: Plane
- 3: Dach
- 4: Seitenplane
- 5: Seitenwand
- 6: Laderaum
- 7: Flügeltüren
- 8: Rückwand
- 9: Runge
- 10: Ladeboden
- 11: Holmstruktur
- 12: Schiebeverdeck
- 13: oberer Schenkel
- 14: seitlicher Schenkel
- 15: Schlitz
- 16: Rungenroller
- 17: Rungenschlitten
- 18: Rungenlaufrollen
- 19: Aufnahmeraum
- 20: Rungenschlittenabschnitt
- 21: Kragen
- 22: Anschlag
- 23: Öffnung
- 24: Rungenlauffläche
- 25: Stützfläche
- 26: Planenroller
- 27: Planenschlitten
- 28: Planenlaufrollen
- 29: Aufnahmeraum
- 30: Planenlauffläche
- 31: Stützfläche
- 32: innerer Anschlag
- 33: Planenführungsrolle
- 34: Planenführungsfläche
- 35: Spriegelroller
- 36: Spriegel
- 37: Spriegellaufrollen
- 38: Spriegellauffläche
- 39: Spriegelstützrolle
- 40: Stützfläche
- 41: Spriegelführungsrolle
- 42: Spriegelführungsfläche
- 43: Kunststoffdichtung
- 44: Montageprofil
- 45: Gewindebohrung
- 46: Schraube
- 47: Schraubverbindung
- 48: Aufnahme
- 49: Anlagefläche
- 50: Anlagefläche
- 51: Anlagefläche

## Patentansprüche

1. Dach eines Planenaufbaus (1) für ein Nutzfahrzeug, insbesondere Lastkraftwagen, Anhänger oder Sattelauflieger, mit wenigstens einer Holmstruktur (11), wenigstens einem Rungenroller (16) zum Verschieben einer mit dem Rungenroller (16) verbundenen Runge (9) in Richtung der Holmstruktur (11) und mit wenigstens einem Planenroller (26) zum Verschieben einer mit dem Planenroller (26) verbundenen Plane (4) in Richtung der Holmstruktur, wobei der Rungenroller (26) wenigstens eine auf einer Rungenlauffläche (24) der Holmstruktur (11) in Längsrichtung der Holmstruktur (11) abrollende und den Rungenroller (16) im Wesentlichen in Schwerkraftrichtung stützende Rungenlaufrolle (18) aufweist, wobei der Planenroller (26) wenigstens eine auf einer Planenlauffläche (30) der Holmstruktur (11) in Längsrichtung der Holmstruktur (11) abrollende und den Planenroller (26) im Wesentlichen in Schwerkraftrichtung stützende Planenlaufrolle (28) aufweist und wobei der Planenroller (26) wenigstens eine den Planenroller (26) im Wesentlichen quer zur Schwerkraftrichtung an wenigstens einer Planenstützfläche der Holmstruktur (11) abstützende Planenabstützung aufweist,
**dadurch gekennzeichnet, dass**
der obere Rand der wenigstens einen Rungenlaufrolle (18) auf oder oberhalb einer durch die Planenabstützung und parallel zum Dach (3) verlaufenden Ebene angeordnet ist, dass der wenigstens eine Rungenroller (16) einen Rungenschlitten (17) und wenigstens eine an dem Rungenschlitten (17) festgelegte Rungenlaufrolle (18) aufweist und dass jede Rungenlaufrolle (18) in Längsrichtung der Holmstruktur (11) gesehen an der der wenigstens einen Planenabstützung abgewandten Seite des an die wenigstens eine Rungenlaufrolle (18) angrenzenden Rungenschlittenabschnitts (20) festgelegt ist.

2. Dach nach Anspruch 1,
**dadurch gekennzeichnet, dass**
die wenigstens eine Planenstützfläche (34) der Holmstruktur (11) als Planenführungsfläche und die wenigstens eine Planenabstützung des Planenrollers (26) als eine auf der wenigstens einen Planenführungsfläche (34) in Längsrichtung der Holmstruktur (11) abrollende und den Planenroller (26) im Wesentlichen quer zur Schwerkraftrichtung führende Planenführungsrolle (33) ausgebildet sind und dass der obere Rand der wenigstens einen Rungenlaufrolle (18) auf oder oberhalb einer durch die Planenführungsrolle (33) und parallel zum Dach (3) verlaufenden Ebene angeordnet ist.

3. Dach nach Anspruch 1 oder 2,
**dadurch gekennzeichnet, dass**
eine durch die Planenabstützung und/oder Planenführungsrolle (33) des wenigstens einen Planenrollers (26) und parallel zum Dach (3) verlaufende Ebene die wenigstens eine Rungenlaufrolle (18) des wenigstens einen Rungenrollers (16) zwischen dem oberen Rand und dem unteren Rand der Rungenlaufrolle (18) schneidet.

4. Dach nach einem der Ansprüche 1 bis 3,
**dadurch gekennzeichnet, dass**
die wenigstens eine Planenabstützung und/oder Planenführungsrolle (33) des wenigstens einen Planenrollers (26) unterhalb der wenigstens einen Planenlaufrolle (28) des Planenrollers (26) angeordent ist und/oder dass der wenigstens eine Planenroller (26) derart gegenüber der Holmstruktur (11), insbesondere nach außen, schwenkbar vorgesehen ist, dass die wenigstens eine Planenabstützung und/oder Planenführungsrolle (33) von der wenigstens einen Planenstützfläche und/oder Planenführungsfläche (34) beabstandet ist und/oder dass der wenigstens eine Planenroller (26) wenigstens zwei, vorzugsweise auf einer gemeinsamen Planenlauffläche (30) der Holmstruktur (11) ablaufend vorgesehene, Planenlaufrollen (28) aufweist.

5. Dach nach einem der Ansprüche 1 bis 4,
**dadurch gekennzeichnet, dass**
der wenigstens eine Rungenroller (16) wenigstens zwei an dem Rungenschlitten (17) festgelegte Rungenlaufrollen (18) aufweist und dass, vorzugsweise, die wenigstens zwei Rungenraufrollen (18) in Längsrichtung der Holmstruktur (11) gesehen auf derselben Seite des an die wenigstens eine Rungenlaufrolle (18) angrenzenden Rungenschlittenabschnitts (20) vorgesehen sind.

6. Dach nach einem der Ansprüche 1 bis 5,
**dadurch gekennzeichnet, dass**
wenigstens zwei Rungenlaufrollen (18) des wenigstens einen Rungenrollers (16) auf einer gemeinsamen Rungenlauffläche (24) der Holmstruktur (11) ablaufend vorgesehen sind und/oder dass die wenigstens eine Planenstützfläche und/oder Planenführungsfläche (34) gegenüber einer an der Außenseite der Holmstruktur (11) vorgesehenen Ebene nach innen, insbesondere in Richtung der wenigstens einen Rungenlaufrolle (18), versetzt angeordnet ist.

7. Dach nach einem der Ansprüche 1 bis 6,
**dadurch gekennzeichnet, dass**
die wenigstens eine Rungenlauffläche (24) der Holmstruktur (11) und/oder die wenigstens eine Planenlauffläche (30) der Holmstruktur (11) eine im Querschnitt der Holmstruktur (11) gekrümmte Form aufweist und/oder dass die wenigstens eine Rungenlaufrolle (18) und/oder die wenigstens eine Planenlaufrolle (28) eine gekrümmte Lauffläche aufweist und/oder dass die wenigstens eine Planenführungsfläche (34) der Holmstruktur (11) eine ebene Form und/oder die Planenführungsrolle (33) eine ebene Lauffläche aufweist.

8. Dach nach einem der Ansprüche 1 bis 7,
**dadurch gekennzeichnet, dass**
sich der Rungenschlitten (17) des wenigstens einen Rungenrollers (16) durch einen nach unten offenen, sich in Längsrichtung der Holmstruktur (11) erstreckenden Schlitz (15) in die Holmstruktur (11) hinein erstreckt und dass, vorzugsweise, der an die wenigstens eine Rungenlaufrolle (18) angrenzende Rungenschlittenabschnitt (20) in Längsrichtung der Holmstruktur (11) gesehen seitlich neben der wenigstens einen Rungenlauffläche (24) angeordnet ist und/oder an der dem Planenroller (26) zugewandten Seite des Schlitzes (15) sich eine wenigstens überwiegend quer zur Schwerkraftrichtung ausgerichtete Anlagefläche (49) für ein an wenigstens einem Ende der Holmstruktur (11) eingeschobenes Montageprofil (44) vorgesehen ist.

9. Dach nach einem der Ansprüche 1 bis 7,
**dadurch gekennzeichnet, dass**
unterhalb der Planenstützfläche und/oder Planenführungsfläche (34) eine zu der vom Planenroller (26) abgewandten Seite der Holmstruktur (11) offene, insbesondere U-förmige, Aufnahme (48) zur Aufnahme eines von einem Ende der Holmstruktur (11) eingeschobenen Montageprofils (44) vorgesehen ist und dass, vorzugsweise, die Aufnahme (48) für das Montageprofil (44) sich wenigstens bis zu einer durch die Planenstützfläche und/oder Planenführungsfläche (34) definierten und senkrecht zum Dach (3) verlaufenden Ebene (E4) in Richtung der dem Planenroller (26) zugewandten Seite der Holmstruktur (11) erstreckt.

10. Dach nach einem der Ansprüche 1 bis 9,
**dadurch gekennzeichnet, dass**
der Rungenschlitten (17) derart schwenkbar mit der Runge (9) verbunden ist, so dass die Runge (9) gegenüber dem Rungenschlitten (17) um eine Achse parallel zur Längserstreckung der Holmstruktur (11) schwenkbar ist.

11. Dach nach einem der Ansprüche 1 bis 10,
**dadurch gekennzeichnet, dass**
die Holmstruktur (11) wenigstens eine sich in Längsrichtung der Holmstruktur (11) erstreckende Stützfläche (25) zum Abrollen der wenigstens einen Rungenlaufrolle (18) in einer von der Rungenlauffläche (24) abgehobenen Stellung aufweist.

12. Dach nach einem der Ansprüche 1 bis 11,
**dadurch gekennzeichnet, dass**
wenigstens ein Spriegelroller (35) zum Verschieben eines Spriegels (36) längs der Holmstruktur (11) vorgesehen ist und dass der Spriegelroller (35) wenigstens eine auf einer Spriegellauffläche (38) der Holmstruktur (11) in Längsrichtung der Holmstruktur (11) abrollende und den Rungenroller (16) im Wesentlichen in Schwerkraftrichtung tragende Spriegellaufrolle (37) und/oder wenigstens eine auf einer Stützfläche (40) der Holmstruktur (11) in Längsrichtung der Holmstruktur (11) abrollende und den Spriegelroller (35) im Wesentlichen entgegen der Schwerkraftrichtung gegenüber einem Abheben des Spriegelrollers (35) sichernde Spriegelstützrolle (39) und/oder wenigstens eine den Spriegelroller (35) im Wesentlichen quer zur Schwerkraftrichtung den Spriegelroller (35) führende, auf einer Spriegelführungsfläche (42) der Holmstruktur (11) abrollende Spriegelführungsrolle (41) aufweist.

13. Dach nach einem der Ansprüche 1 bis 12,
**dadurch gekennzeichnet, dass**
die wenigstens eine Spriegellaufrolle (37) des wenigstens einen Spriegelrollers (35) weiter innen in Bezug auf die wenigstens einen Spriegelstützrolle (39) des wenigstens einen Spriegelrollers (35) vorgesehen ist und, vorzugsweise, dass die Spriegelführungsrolle (41) des wenigstens einen Spriegelrollers (35) in Querrichtung zur Holmstruktur (11) zwischen der Spriegellaufrolle (37) und der Spriegelstützrolle (39) vorgesehen ist.

14. Planenaufbau (1) für ein Nutzfahrzeug, insbesondere Lastkraftwagen, Anhänger oder Sattelauflieger, mit einem Dach (3), mit wenigstens einer über einen Rungenroller (16) am Dach (3) geführten Runge (9) und mit wenigstens einer über wenigstens einen Planenroller (26) am Dach (3) geführten Plane (4),
**dadurch gekennzeichnet, dass**
das Dach (3) nach einem der Ansprüche 1 bis 13 ausgebildet ist.

## Claims

1. Roof of a tarpaulin body (1) for a commercial vehicle, in particular heavy goods vehicle, trailer or semi-trailer, having at least one beam structure (11), at least one stanchion roller (16) for displacing a stanchion (9) connected to the stanchion roller (16) in the direction of the beam structure (11) and having at least one tarpaulin roller (26) for displacing a tarpaulin (4) connected to the tarpaulin roller (26) in the direction of the beam structure, wherein the stanchion roller (26) has at least one stanchion castor (18) rolling on a stanchion running surface (24) of the beam structure (11) in the longitudinal direction of the beam structure (11) and supporting the stanchion roller (16) substantially in the direction of gravity, wherein the tarpaulin roller (26) has at least one tarpaulin castor (28) rolling on a tarpaulin running surface (30) of the beam structure (11) in the longitudinal direction of the beam structure (11) and supporting the tarpaulin roller (26) substantially in the direction of gravity and wherein the tarpaulin roller (26) has at least one tarpaulin support supporting the tarpaulin roller (26) substantially transversely to the direction of gravity on at least one tarpaulin support surface of the beam structure (11), **characterised in that** the upper edge of the at least one stanchion castor (18) is arranged on or above a plane running through the tarpaulin support and parallel to the roof (3), **in that** the at least one stanchion roller (16) has a stanchion carriage (17) and at least one stanchion castor (18) fixed to the stanchion carriage (17) and **in that** each stanchion castor (18), viewed in the longitudinal direction of the beam structure (11), is fixed to the side of the stanchion carriage section (20) adjoining the at least one stanchion castor (18), which faces away from the at least one tarpaulin support.

2. Roof according to claim 1, **characterised in that** the at least one tarpaulin support surface (34) of the beam structure (11) is designed as a tarpaulin guide surface and the at least one tarpaulin support of the tarpaulin roller (26) as a tarpaulin guide roll (33) rolling on the at least one tarpaulin guide surface (34) in the longitudinal direction of the beam structure (11) and guiding the tarpaulin roller (26) substantially transversely to the direction of gravity and **in that** the upper edge of the at least one stanchion castor (18) is arranged on or above a plane running through the tarpaulin guide roll (33) and parallel to the roof (3).

3. Roof according to claim 1 or 2, **characterised in that** a plane running through the tarpaulin support and/or tarpaulin guide roll (33) of the at least one tarpaulin roller (26) and parallel to the roof (3) intersects the at least one stanchion castor (18) of the at least one stanchion roller (16) between the upper edge and the lower edge of the stanchion castor (18).

4. Roof according to any one of claims 1 to 3, **characterised in that** the at least one tarpaulin support and/or tarpaulin guide roll (33) of the at least one tarpaulin roller (26) is arranged below the at least one tarpaulin castor (28) of the tarpaulin roller (26) and/or **in that** the at least one tarpaulin roller (26) is provided so as to be pivotable, in particular outwards, with respect to the beam structure (11) in such manner that the at least one tarpaulin support and/or tarpaulin guide roll (33) is spaced apart from the at least one tarpaulin support surface and/or tarpaulin guide surface (34) and/or **in that** the at least one tarpaulin roller (26) has at least two tarpaulin castors (28) preferably provided running on a common tarpaulin running surface (30) of the beam structure (11).

5. Roof according to any one of claims 1 to 4, **characterised in that** the at least one stanchion roller (16) has at least two stanchion castors (18) fixed to the stanchion carriage (17) and **in that**, preferably, the at least two stanchion castors (18) are provided, viewed in the longitudinal direction of the beam structure (11), on the same side of the stanchion carriage section (20) adjoining the at least one stanchion castor (18).

6. Roof according to any one of claims 1 to 5, **characterised in that** the at least two stanchion castors (18) of the at least one stanchion roller (16) are provided running on a common stanchion running surface (24) of the beam structure (11) and/or **in that** the at least one tarpaulin support surface and/or tarpaulin guide surface (34) is arranged offset inwards with respect to a plane provided on the outside of the beam structure (11), in particular in the direction of the at least one stanchion castor (18).

7. Roof according to any one of claims 1 to 6, **characterised in that** the at least one stanchion running surface (24) of the beam structure (11) and/or the at least one tarpaulin running surface (30) of the beam structure (11) has a shape curved in the cross-section of the beam structure (11) and/or **in that** the at least one stanchion castor (18) and/or the at least one tarpaulin castor (28) has a curved running surface and/or **in that** the at least one tarpaulin guide surface (34) of the beam structure (11) has a flat shape and/or the tarpaulin guide roll (33) has a flat running surface.

8. Roof according to any one of claims 1 to 7, **characterised in that** the stanchion carriage (17) of the at least one stanchion roller (16) extends into the beam structure (11) through a slot (15) open downwardly and extending in the longitudinal direction of the beam structure (11) and **in that**, preferably, the stanchion carriage section (20) adjoining the at least one stanchion castor (18) is arranged, viewed in the longitudinal direction of the beam structure (11), laterally next to the at least one stanchion running surface (24) and/or, on the side of the slot (15) facing the tarpaulin roller (26), a bearing surface (49) aligned at least predominately transversely to the direction of gravity is provided for an assembly profile (44) inserted at at least one end of the beam structure (11).

9. Roof according to any one of claims 1 to 7, **characterised in that**, below the tarpaulin support surface and/or tarpaulin guide surface (34), a receptacle (48), which is open, in particular U-shaped, to the side of the beam structure (11) facing away from the tarpaulin roller (26), is provided for receiving an assembly profile (44) inserted from one end of the beam structure (11) and **in that**, preferably, the receptacle (48) for the assembly profile (44) extends in the direction of the side of the beam structure (11) facing the tarpaulin roller (26) at least up to a plane (E4) defined by the tarpaulin support surface and/or tarpaulin guide surface (34) and running perpendicular to the roof (3).

10. Roof according to any one of claims 1 to 9, **characterised in that** the stanchion carriage (17) is pivotably connected to the stanchion (9) in such manner that the stanchion (9) is pivotable about an axis parallel to the longitudinal extension of the beam structure (11) with respect to the stanchion carriage (17).

11. Roof according to any one of claims 1 to 10, **characterised in that** the beam structure (11) has at least one support surface (25) extending in the longitudinal direction of the beam structure (11) for rolling the at least one stanchion castor (18) in a position lifted off the stanchion running surface (24).

12. Roof according to any one of claims 1 to 11, **characterised in that** at least one hoop roller (35) is provided for displacing a hoop (36) along the beam structure (11) and **in that** the hoop roller (35) has at least one hoop castor (37) rolling on a hoop running surface (38) of the beam structure (11) in the longitudinal direction of the beam structure (11) and carrying the stanchion roller (16) substantially in the direction of gravity and/or at least one hoop support roll (39) rolling on a support surface (40) of the beam structure (11) in the longitudinal direction of the beam structure (11) and securing the hoop roller (35) substantially counter to the direction of gravity from lifting off the hoop roller (35) and/or at least one hoop guide roll (41) guiding the hoop roller (35) substantially transversely to the direction of gravity and rolling on a hoop guide surface (42) of the beam structure (11).

13. Roof according to any one of claims 1 to 12, **characterised in that** the at least one hoop castor (37) of the at least one hoop roller (35) is provided further inside in relation to the at least one hoop support roll (39) of the at least one hoop roller (35) and, preferably, **in that** the hoop guide roll (41) of the at least one hoop roller (35) is provided between the hoop castor (37) and the hoop support roll (39) in the transverse direction to the beam structure (11).

14. Tarpaulin body (1) for a commercial vehicle, in particular heavy goods vehicle, trailer or semi-trailer, having a roof (3), having at least one stanchion (9) guided via a stanchion roller (16) on the roof (3) and having at least one tarpaulin (4) guided via at least one tarpaulin roller (26) on the roof (3), **characterised in that** the roof (3) is designed according to any one of claims 1 to 13.

## Revendications

1. Toit d'une structure de bâche (1) pour un véhicule utilitaire, notamment un camion, une remorque ou une semi-remorque, avec au moins une structure de longeron (11), au moins un rouleau de rancher (16) pour déplacer un rancher (9) relié au rouleau de rancher (16) en direction de la structure de longeron (11) et avec au moins un rouleau de bâche (26) pour déplacer une bâche (4) reliée au rouleau de bâche (26) en direction de la structure de longeron, le rouleau de rancher (26) présentant au moins un galet de rancher (18) roulant sur une surface de roulement de rancher (24) de la structure de longeron (11) en direction longitudinale de la structure de longeron (11) et soutenant le rouleau de rancher (16) essentiellement dans le sens de la force de gravité, le rouleau de bâche (26) présentant au moins un galet de bâche (28) roulant sur une surface de roulement de bâche (30) de la structure de longeron (11) en direction longitudinale de la structure de longeron (11) et soutenant le rouleau de bâche (26) essentiellement dans le sens de la force gravité et le rouleau de bâche (26) présentant au moins un appui de bâche soutenant le rouleau de bâche (26) essentiellement transversalement par rapport au sens de la force de gravité sur au moins une surface d'appui de bâche de la structure de longeron (11),
**caractérisé en ce que**
le bord supérieur de l'au moins un galet de rancher (18) est agencé sur ou au-dessus d'un plan passant par l'appui de bâche et parallèlement au toit (3), **en ce que** le au moins un rouleau de rancher (16) présente un chariot de rancher (17) et au moins un galet de rancher (18) fixé sur le chariot de rancher (17) et **en ce que** chaque galet de rancher (18), vu dans la direction longitudinale de la structure de longeron (11), est fixé sur le côté opposé de l'au moins un appui de bâche de la section de chariot de rancher (20) adjacente à l'au moins un galet de rancher (18).

2. Toit selon la revendication 1,
**caractérisé en ce que**
ladite au moins une surface d'appui de bâche (34) de la structure de longeron (11) est conçue en tant que surface de guidage de bâche et ledit au moins un appui de bâche du rouleau de bâche (26) est conçu en tant que rouleau de guidage de bâche (33) roulant sur ladite au moins une surface de guidage de bâche (34) en direction longitudinale de la structure de longeron (11) et guidant le rouleau de bâche (26) essentiellement transversalement par rapport au sens de la force de gravité et **en ce que** le bord supérieur de l'au moins un galet de rancher (18) est agencé sur ou au-dessus d'un plan passant par le rouleau de guidage de bâche (33) et parallèlement par rapport au toit (3).

3. Toit selon la revendication 1 ou 2,
**caractérisé en ce que**
un plan passant par l'appui de bâche et/ou le rouleau de guidage de bâche (33) dudit au moins un rouleau de bâche (26) et parallèlement au toit (3) croise ledit au moins un galet de rancher (18) dudit au moins un rouleau de rancher (16) entre le bord supérieur et le bord inférieur du galet de rancher (18).

4. Toit selon l'une des revendications 1 à 3,
**caractérisé en ce que**
ledit au moins un appui de bâche et/ou rouleau de guidage de bâche (33) dudit au moins un rouleau de bâche (26) est agencé en dessous dudit au moins un galet de bâche (28) du rouleau de bâche (26) et/ou **en ce que** l'on prévoit ledit au moins un rouleau de bâche (26) pivotant par rapport à la structure de longeron (11), notamment vers l'extérieur, **en ce que** ledit au moins un appui de bâche et/ou rouleau de guidage de bâche (33) est espacé de ladite au moins une surface d'appui de bâche et/ou surface de guidage de bâche (34) et/ou **en ce que** ledit au moins un rouleau de bâche (26) présente au moins deux galets de bâche (28), de préférence prévus pour se déplacer sur une surface de roulement de bâche (30) commune de la structure de longeron (11).

5. Toit selon l'une des revendications 1 à 4,
**caractérisé en ce que**
le au moins un rouleau de rancher (16) présente au moins deux galets de rancher (18) fixés sur le chariot de rancher (17) et **en ce que** l'on prévoit, de préférence, lesdits au moins deux galets de rancher (18), vus en direction longitudinale de la structure de longerons (11), sur le même côté de la section de chariot de rancher (20) adjacente audit au moins un galet de rancher (18).

6. Toit selon l'une des revendications 1 à 5,
**caractérisé en ce que**
l'on prévoit lesdits au moins deux galets de rancher (18) dudit au moins un rouleau de rancher (16) se déplaçant sur une surface de roulement de rancher (24) commune de la structure de longeron (11) et/ou **en ce que** ladite au moins une surface d'appui de bâche et/ou surface de guidage de bâche (34) est agencée décalée vers l'intérieur par rapport à un plan prévu sur le côté extérieur de la structure de longeron (11), notamment en direction dudit au moins un galet de rancher (18).

7. Toit selon l'une des revendications 1 à 6,
**caractérisé en ce que**
ladite au moins une surface de roulement de rancher (24) de la structure de longeron (11) et/ou ladite au moins une surface de roulement de bâche (30) de la structure de longeron (11) présente une forme courbée en section transversale de la structure de longeron (11) et/ou **en ce que** ledit au moins un galet de rancher (18) et/ou ledit au moins un galet de bâche (28) présente une surface de roulement courbée et/ou **en ce que** ladite au moins une surface de guidage de bâche (34) de la structure de longeron (11) présente une forme plane et/ou le rouleau de guidage de bâche (33) présente une surface de roulement plane.

8. Toit selon l'une des revendications 1 à 7,
**caractérisé en ce que**
le chariot de rancher (17) dudit au moins un galet de rancher (16) s'étend à l'intérieur de la structure de longeron (11) à travers une fente (15), ouverte vers le bas, et s'étendant dans la direction longitudinale de la structure de longeron (11) et **en ce que**, de préférence, la section de chariot de rancher (20) adjacente audit au moins un galet de rancher (18), vue dans la direction longitudinale de la structure de longeron (11), est agencée latéralement à côté de ladite au moins une surface de roulement de rancher (24), et/ou l'on prévoit sur le côté de la fente (15), dirigé vers le rouleau de bâche (26), une surface d'appui (49) orientée au moins principalement transversalement par rapport au sens de la force de gravité pour un profilé de montage (44) inséré sur au moins une extrémité de la structure de longeron (11).

9. Toit selon l'une des revendications 1 à 7,
**caractérisé en ce que**
l'on prévoit en dessous de la surface d'appui de bâche et/ou de la surface de guidage de bâche (34) un logement (48), notamment en forme de U, ouvert vers le côté de la structure de longeron (11) opposé au rouleau de bâche (26), pour loger un profilé de montage (44) inséré par une extrémité de la structure de longeron (11), et **en ce que**, de préférence, le logement (48) pour le profilé de montage (44) s'étend au moins jusqu'à un plan (E4) défini par la surface d'appui de bâche et/ou la surface de guidage de bâche (34) et passant perpendiculairement par rapport au toit (3) en direction du côté de la structure de longeron (11) orienté vers le rouleau de bâche (26).

10. Toit selon l'une des revendications 1 à 9,
**caractérisé en ce que**
le chariot de rancher (17) est relié, de manière pivotante, au rancher (9) de telle sorte que le rancher (9) est susceptible de pouvoir pivoter par rapport au chariot de rancher (17) autour d'un axe parallèle par rapport à l'extension longitudinale de la structure de longeron (11).

11. Toit selon l'une des revendications 1 à 10,
**caractérisé en ce que**
la structure de longeron (11) présente au moins une surface d'appui (25) s'étendant dans la direction longitudinale de la structure de longeron (11) pour faire rouler ledit au moins un galet de rancher (18) dans une position soulevée par rapport à la surface de roulement de rancher (24).

12. Toit selon l'une des revendications 1 à 11,
**caractérisé en ce que**
l'on prévoit au moins un rouleau d'arceau (35) pour déplacer un arceau (36) le long de la structure de longeron (11) et **en ce que** le rouleau d'arceau (35) présente au moins un galet d'arceau (37) roulant sur une surface de roulement d'arceau (38) de la structure de longeron (11) dans la direction longitudinale de la structure de longeron (11) et portant le rouleau de rancher (16) essentiellement dans le sens de la force de gravité et/ou au moins un rouleau d'appui d'arceau (39) roulant sur une surface d'appui (40) de la structure de longeron (11) dans la direction longitudinale de la structure de longeron (11) et bloquant le rouleau d'arceau (35), essentiellement dans le sens inverse au sens de la force de gravité, contre un soulèvement du rouleau d'arceau (35) et/ou au moins un rouleau de guidage d'arceau (41) guidant le rouleau d'arceau (35) essentiellement transversalement par rapport au sens de la force de gravité et roulant sur une surface de guidage d'arceau (42) de la structure de longeron (11).

13. Toit selon l'une des revendications 1 à 12,
**caractérisé en ce que**
l'on prévoit ledit au moins un galet d'arceau (37) dudit au moins un rouleau d'arceau (35) plus à l'intérieur par rapport audit au moins un rouleau d'appui d'arceau (39) dudit au moins un rouleau d'arceau (35) et, de préférence, **en ce que** l'on prévoit le rouleau de guidage d'arceau (41) dudit au moins un rouleau d'arceau (35), dans la direction transversale par rapport à la structure de longeron (11), entre le galet d'arceau (37) et le rouleau d'appui d'arceau (39).

14. Structure de bâche (1) pour un véhicule utilitaire, notamment un camion, une remorque ou une semi-remorque, avec un toit (3), avec au moins un rancher (9) conduit sur le toit (3) par un rouleau de rancher (16) et avec au moins une bâche (4) conduite sur le toit (3) par au moins un rouleau de bâche (26),
**caractérisée en ce que**
le toit (3) est conçu selon l'une des revendications 1 à 13.
